(19)

Europäisches
Patentamt
European
Patent Office
Office européen
des brevets

(11) **EP 2 395 431 A1**

(12) **EUROPEAN PATENT APPLICATION**

(43) Date of publication:
**14.12.2011 Bulletin 2011/50**

(51) Int Cl.:
**G06F 9/48** (2006.01)

(21) Application number: **10165727.8**

(22) Date of filing: **11.06.2010**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO SE SI SK SM TR**<br>Designated Extension States:<br>**BA ME RS** | (71) Applicant: **Siemens Aktiengesellschaft 80333 München (DE)**<br><br>(72) Inventor: **Kruckenberg, Hans 2620, Albertslund (DK)** |

(54) **Method and apparatus for scheduling plural tasks**

(57)    It is described a method for scheduling a first task and a second task, wherein the first task is to be performed repeatedly with a predetermined first repetition time interval ($\Delta t1$) and the second task is to be performed repeatedly with a predetermined second repetition time interval ($\Delta t2$), the method comprising: scheduling the first task for performing the first task at first time points; and scheduling the second task for performing the second task at second time points, wherein each of the second time points is different from any of the first time points. Further an apparatus for scheduling a first task and a second task is described.

none — L1 — L2 — L1 — L3 — L1 — L2 — L1 — L4 — L1 — L2 — L1 — L3 — L1 — L2 — L1 — none — L1 — L2 — L3 — L1 . . .

EP 2 395 431 A1

**Description**

Field of invention

The present invention relates to a method and to an apparatus for scheduling a first task and a second task, wherein the first task is to be performed repeatedly with a predetermined first repetition time interval and the second task is to be performed repeatedly with a predetermined second repetition time interval. Further, the present invention relates to a method for performing a first task and a second task which have to be performed repeatedly.

Art Background

In a number of technical fields it is necessary to perform one or more tasks repeatedly, wherein the tasks may have different repetition time intervals. The tasks may for example comprise controlling a device, acquiring a measurement value or sampling a signal generated by a sensor. In particular, in a wind turbine for generating electric energy from wind energy, a large number of electrical sensors exists that sense or detect a condition or a configuration of the wind turbine or which may detect or measure external conditions, for example environment parameters, such as temperature, wind velocity and the like. Further, these sensors or measurement devices installed within the wind turbine or located at other locations outside the wind turbine may generate and/or supply information about temperature, position, quality and status of components of the wind turbine. In particular, the sensor signals generated by the measurement devices or sensors may be sampled (acquired and/or read out at particular time points) by the turbine's control computer at different repetition time intervals, typically from fractions of milliseconds up to one or more seconds.
An "action" or a "task" may comprise operations such as acquiring a measurement signal, controlling a sensor, sampling a signal generated by a sensor or measurement device, reading a measurement value, triggering a sensor causing it to acquire a measurement value, and the like. In general, a plurality of tasks may have to be performed during operation of an apparatus, a device or an arrangement for monitoring the condition, the configuration, and/or the state of the apparatus, device or arrangement. In particular, the plurality of tasks may have to be performed repeatedly with different repetition time intervals. In particular, the repetition time interval may represent a time between performing consecutive instances of performing or executing a given task to be performed repeatedly with the repetition time interval.
When a plurality of tasks has to be performed, wherein the tasks have different repetition time intervals, it may be difficult to schedule the different tasks or actions to be carried out, involving a large administrative overhead, when the number of different repetition time intervals becomes large, such as larger than 5, 10, 20 or 100 or when the number of task becomes large. Handling the tasks and scheduling the tasks may be difficult and may lead to significant jitter on sampling time intervals and to a complicated implementation of high precision digital turbine control algorithms in software.
Conventionally, two commonly used algorithms for sensor sampling according to a sampling (or repetition) time interval table are used: The first algorithm utilizes a list of absolute delays and the second algorithm utilizes a list of sorted, relative delays.
The list of absolute delays comprises an entry for each of the tasks or actions. Each entry in the list of absolute delays comprises a description of the actual action or task (such as sensor type, scaling, alarm limits, and so on) together with the remaining number of time units that should expire before the task should be carried out the next time. The time unit may correspond to the shortest repetition time interval (or sampling time interval) of the tasks to be scheduled. The list of absolute delays is examined for each time unit (also referred to as zeroth repetition time interval) record by record. Therein, the remaining number of time units that should expire before the action should be carried out the next time comprised in every record is reduced by one. If this number is 0 for a particular record, the task associated with this record is performed (or executed). Then, the remaining number of time units that should expire before the action should be carried out the next time of this particular record is re-established to the original value. Thus, for examining which of the tasks in the list of absolute delays is to be carried out the whole list of absolute delays comprising all entries or records must be examined. Thereby, an administrative overhead is created. In particular, all records in the list of absolute delays must be examined or processed, even though no action is to be carried out at the current point in time for any of the tasks comprised in the list of absolute delays.
The list of sorted, relative delays comprises records or elements holding a description of the actual action or task together with the remaining number of time units that should expire from the expiry of the preceding element in the list before the action should be carried out the next time. Thus, the delays are always given relative to the execution time of the element at the preceding position in the list of sorted, relative delays, except for the first element in the list, which holds an absolute delay. When the list of sorted, relative delays is utilized for scheduling the tasks comprised in the list, only the first list element or record must be processed which is processed if the relative delay is zero.
However, it may occur that a new task needs to be carried out at a still further repetition time interval being different from all repetition time intervals of the task already comprised in the list. Thus, it may be required that the new task has to be scheduled using the list of sorted, relative delays. Thus, an entry or record for the new task has to be inserted into the list of sorted, relative delays. Thereby, the new task has to be inserted at the proper position which results in the intended repetition time interval which is defined for this new task. For inserting the new task or a record for this new task in the list of sorted, relative delays the list elements in the list of sorted, relative delays has to be processed from the beginning until the insertion position is found. When A-1 actions or tasks are present in the list of sorted, relative delays, a maximum of A-1 elements may have to be processed until the correct insertion position is found. Thereby, a significant administrative burden or overhead may be produced.

There may be a need for a method and an apparatus for scheduling a first task and a second task, wherein the first task is to be performed repeatedly with a predetermined first repetition time interval and the second task is to be performed repeatedly with a predetermined second repetition time interval, wherein the method or the apparatus is suitable for scheduling a large number of tasks and wherein in particular a computational effort or computational time is independent on the number of tasks to be performed repeatedly. In particular, there may be a need for a method and an apparatus for scheduling a first task and a second task to be performed repeatedly with different repetition time intervals, which requires less administrative overhead during operation or/and maintenance of the method or the apparatus for scheduling the two tasks having two different repetition time intervals. In particular, there may be a need for a method and for an apparatus for scheduling a first task and a second task to be performed repeatedly with different repetition time intervals which is improved compared to the prior art in particular with respect to maintaining the method and/or the apparatus and with respect to adaptability for incorporating further tasks having a still different repetition time interval.

Summary of the Invention

This need may be met by the subject matter according to the independent claims. Advantageous embodiments of the present invention are described by the dependent claims.

According to an embodiment a method for scheduling a first task and a second task is provided, wherein the first task is to be performed repeatedly with a predetermined first repetition time interval and the second task is to be performed repeatedly with a predetermined second repetition time interval, wherein the method comprises scheduling the first task for performing the first task at first time points; and scheduling the second task for performing the second task at second time points, wherein each of the second time points is different from any of the first time points.

The scheduling may involve setting one or more time points at which the first task and the second task are to be performed or executed. Further, scheduling may involve planning the tasks (in particular time points of the tasks), establishing a list of the time points, establishing time points for performing or executing the tasks, finding a date or establishing a date or time point or time points or dates for performing or executing the tasks, planning or establishing a course of execution or performing the tasks and the like.

The scheduling may also comprise generating a list of time points at which the first task and the second task have to be performed. In particular, scheduling may also involve generating data representative of the first time points and/or the second time points and/or writing the data into a data storage, such as a computer storage. Further, scheduling may comprise executing a program, such as a computer program, for reading the generated list of first time points and second time points and causing the first task to be performed at the first time points and causing the second task to be performed at second time points.

An "action" or a "task" in general may comprise operations such as acquiring a measurement signal, controlling a sensor, sampling a signal generated by a sensor or measurement device, reading a measurement value, triggering a sensor causing it to acquire a measurement value, and the like. In general, the first task and/or the second task may have to be performed during operation of an apparatus, a device or an arrangement for monitoring the condition, the configuration, and/or the state of the apparatus, device or arrangement. In particular, the first task and/or the second task may have to be performed repeatedly with different repetition time intervals. In particular, the repetition time interval may represent a time between performing consecutive instances of performing or executing a given task to be performed repeatedly with the repetition time interval.

The first task and the second task may be representative of any kind of action to be performed, such as controlling a device or an apparatus, measuring a value, acquiring a measuring value from a sensor or detector, sampling a measurement value continuously supplied by a sensor or detector, reading in a signal, triggering a sensor or detector to generate a signal or measurement value, controlling a sensor to acquire or measure a value, reading data from a storage, such as computer storage, writing data to a storage, such as a computer storage, triggering a program to be executed, such as a program running for controlling a sensor or detector, and the like.

In particular, the first task and the second task may comprise measuring a temperature, measuring a position, measuring or controlling a switch, measuring a wind velocity, measuring a rotational speed of a rotor of a wind turbine, measuring a pitch angle of a blade of a wind turbine, measuring an orientation of a nacelle of a wind turbine, measuring an electric power generated by a generator of a wind turbine, measuring an oscillation of the wind turbine, in particular of a blade of the wind turbine, measuring a voltage and/or a current at a generator or at an inverter of a wind turbine, measuring a humidity at a wind turbine, and the like. The first task and the second task may comprise controlling a technical apparatus, executing a program in the technical apparatus, configuring the technical apparatus, and the like.

The first repetition time interval represents the time span or time interval between subsequent or successive time points of the first time points, wherein at each of these first time points the first task is to be executed or performed. Thus, a difference between subsequent time points of the first time points is equal to the first repetition time interval. In an analogous way the second repetition time interval and any other repetition time interval referred to within this application may be defined. In particular, the second repetition time interval is different from the first repetition time interval. In particular, the first repetition time interval and the second repetition time interval may range between 30.000 ms and 1 ms, in particular between 1000 ms and 5 ms, more in particular between 500 ms and 10 ms.

The first task is scheduled to be performed at first time points at which time points the second task is never performed or executed, since each of the second time points is different from any of the first time points. Thereby, the first task is repeatedly performed with the first repetition time interval and the secondary is repeatedly be performed with the second repetition time interval, but they are performed at mutual different time points, such that they are performed in an interleaved manner. Whenever the first task is scheduled to be performed (or is performed) the second task is not scheduled to be performed (or is not performed) and whenever the second task is scheduled to be performed (or is performed) the first task is not scheduled to be performed (or is not performed). This may in particular be achieved, if the first repetition time interval and the second repetition time interval are both larger than a repetition time interval (of a still further task) which may represent a shortest repetition time interval or the time unit or predetermined zeroth repetition time interval. In particular, the first repetition time interval may be equal to two times the zeroth repetition time intervals and the second repetition time interval may be four times the zeroth repetition time interval. In another embodiment the first repetition time interval and the second repetition time interval may assume other values or multiples of the zeroth repetition time interval (or time unit).

It may be easy to incorporate or insert a new task into the scheduling algorithm, when the repetition time interval of the new task is equal to either the first repetition time interval or the second repetition time interval. When the repetition time interval of the new task equals the first repetition time interval the new task is scheduled to be performed at the first time points. When the repetition time interval of the new task equals the second repetition time interval, the new task is scheduled to be performed at the second time points. Thus, administrative overhead may be reduced.

According to an embodiment the method for scheduling a first task and a second task further comprises scheduling a zeroth task for performing the zeroth task at zeroth time points, wherein the zeroth task is to be performed repeatedly with a predetermined zeroth repetition time interval, wherein each one of the first time points is equal to one of the zeroth time points and each one of the second time points is equal to one of the zeroth time points, wherein the zeroth repetition time interval is smaller than the first repetition time interval and smaller than the second repetition time interval.

The zeroth repetition time interval may represent the smallest (or shortest) repetition time intervals of a plurality of tasks that have to be repeatedly performed. The zeroth repetition time interval may also be referred to as the time unit. The zeroth repetition time interval may for example amount to between 1 ms and 20 ms, in particular between 5 ms and 10 ms. The zeroth task is scheduled to be executed or to be performed together with either the first task or the second task but not together with both the first task and the second task. Thus, the zeroth task is not performed in an interleaved manner with the first task and the zeroth task is also not executed or performed in an interleaved manner with the second task. Other tasks having a repetition time interval being equal to the zeroth repetition time interval may be performed at the zeroth time points together with the zeroth task.

Scheduling a new task having a repetition time interval being equal to the zeroth repetition time interval may comprise scheduling the new task to be performed at the zeroth time points. Thus, inserting a new task having a repetition time interval being equal to the zeroth repetition time interval may easily be performed, without involving administrative burden or overhead.

According to an embodiment the first repetition time interval is equal to a product of the zeroth repetition time interval and the number two to the power of a first integer number and the second repetition time interval is equal to a product of the zeroth repetition time interval and the number two to the power of a second integer number. In particular, the zeroth time interval may be referred to as $\Delta t$. Thus, for the first repetition time interval $\Delta t1$ it holds $\Delta t1=\Delta t*2^{I1}$ and for the second repetition time interval $\Delta t2$ it holds $\Delta t2=\Delta t*2^{I2}$, wherein I1 is the first integer number and wherein I2 is the second integer number. In particular, I1 may be 1 or 2 or 3 or 4 or any other integer number. In particular, I2 may be 1 or 2 or 3 or 4 or any other integer number. In particular, I1 may not be equal to I2. Thus, the first repetition time interval $\Delta t1$ and the second repetition time interval $\Delta t2$ are both multiples of the zeroth time interval $\Delta t$, wherein the multiplier is a power of 2. With this choice of the first repetition time interval and the second repetition time interval the interleaved scheduling for execution or for performing of the first task and the second task may easily be achieved.

According to an embodiment the method for scheduling a first task and a second task is further adapted for scheduling at least one further first task and/or for scheduling at least one further second task, wherein the at least one further first task is to be performed repeatedly with the predetermined first repetition time interval and/or the at least one further second task is to be performed repeatedly with the predetermined second repetition time interval, wherein the method further comprises scheduling the at least one further first task for performing the at least one further first task at the first time points; and/or scheduling the at least one further second task for performing the at least one further second task at the second time points. Thus, it is possible to schedule those tasks at the first time points which have same repetition time intervals as the first task, namely which have the first repetition time interval. Thereby, it is enabled to schedule plural tasks having the same repetition time interval. In particular, insertion of a new task having as a repetition time interval the first repetition time interval may be achieved by scheduling the new task to be performed at the first time points. Similarly, a new task having as repetition time interval the second repetition time interval may be achieved by scheduling the new task to be performed at the second time points. Thus, handling and scheduling of multiple tasks may be enabled and may be facilitated.

According to an embodiment the method for scheduling a first task and a second task further comprises establishing a first list comprising the first task and the at least one further first task; and/or establishing a second list comprising the second task and the at least one further second task.

In particular, establishing the first list and/or establishing the second list may comprise creating the first list and/or the second list, (temporarily) storing the first list and/or the second list, printing the first list and/or the second list, transferring the first list and/or the second list to a controller, supplying the first list and/or the second list, in particular to a controller for controlling an apparatus, such as a wind turbine, instantiating one or more computer program objects representing the first list and/or the second list (in particular in a random access memory), updating the first list/the second list, and/or writing the first list and/or the second list into a storage, such as a computer storage, and the like. Establishing the first list and/or the second list may facilitate scheduling the first task, the second task and the further tasks. In particular, establishing the first list and/or establishing the second list may be achieved by a first processing unit and actually using the first list and/or the second list (for actually performing the first task and/or the second task) may by performed by a second processing unit to which the list may have been transferred.

According to an embodiment the method for scheduling a first task and a second task is further adapted for scheduling at least one Nth task, wherein the at least one Nth task is to be performed repeatedly with a predetermined Nth repetition time interval, wherein the Nth repetition time interval is equal to a product of the zeroth repetition time interval and the number two to the power of the integer number N, the integer number N being greater than the first integer number (I1) and being greater than the second integer number (I2), the method further comprising scheduling the at least one Nth task for performing the Nth task at Nth time points, wherein each of the Nth time points is different from any of the first time points and is different from any of the second time points; and establishing at least one further list including a Nth list, the Nth list comprising the at least one Nth task.

The Nth repetition time interval $\Delta tN$ is equal to the zeroth repetition time interval multiplied with $2^N$ ($\Delta tN = \Delta t * 2^N$), wherein N is an integer number, such as for example 1, 2, 3, 4, 5, 6, 7 or any other natural (or integer) number. The Nth list comprises at least one Nth task which is to be repeatedly performed with the Nth repetition time interval. N may be chosen in dependence of the largest repetition time interval of tasks to be considered. In particular, $2^N$ may be in the order of one half times the largest repetition time interval of tasks to be considered. In particular, N may be chosen depending on the application and local requirements.

Thus, a number of lists may be established, each list being designed for harbouring or comprising tasks to be performed with a particular repetition time interval. Thus, in each of the plural lists only those tasks may be comprised which are to be performed repeatedly at a particular same repetition time interval. Thus, inserting a new task in one of the lists is easy, when the new task has a repetition time interval being equal to a repetition time interval of an already incorporated task. This new task may then be scheduled to be performed at the same time points as the already incorporated task having the same repetition time interval.

According to an embodiment the method for scheduling a first task and a second task further comprises determining a particular order for scheduling tasks comprised in the first list, the second list and the at least one further list by considering a N-bit binary counter which is incremented by one after each expiry of the zeroth repetition time interval.

Instead of having only one delay list as used in the conventional algorithms described above an array of lists may exist. These lists may be numbered from 0 and onwards until list N. List 0 may hold elements or tasks that should repeatedly be performed with the zeroth repetition time interval, or time unit. List 1 may hold elements or tasks that should be delayed two time units or which should in other words be repeatedly performed with the second repetition time interval, which may in particular amount to $\Delta t * 2$. List 2 may hold elements of tasks that should be repeatedly performed with the second repetition time interval, which may in particular be $\Delta t * 2^2$, and so on. List D may hold elements or tasks that should be repeatedly be performed or executed with a Dth repetition time interval, which may in particular be $\Delta t * 2^D$

According to an embodiment a scheme for processing of N lists (excluding the zeroth list holding tasks to be repeatedly be performed with the zeroth repetition time interval) may be obtained by creating an N-bit binary counter (a binary number representation comprising N positions, each position representing a bit), wherein the N-bit binary counter (also referred to as c) may be incremented by 1 for every time unit (zeroth repetition time interval) and wrapping around from $2^N$-1 to 0 (thus starting again at 0 after $2^N$-1 is reached). After every increment the number of least significant binary zeroes in the N-bit binary counter c may be counted. The next list to be processed may be that list having a number one more than the number of the least significant binary zeroes in the binary counter c. However, when the binary counter c is 0, no list may be processed (except list 0).

Thereby, the order of the lists may be easily obtained, thus enabling scheduling of the tasks comprised within the lists. After the ordering of the lists has been determined one list after the other in the order of the lists is processed together with the zeroth list comprising tasks to be repeatedly be performed with zeroth repetition time intervals which is equal to $\Delta t$. Thereby, scheduling of a large number of tasks having different repetition time intervals is enabled.

According to an embodiment the method for scheduling a first task and a second task further comprises scheduling a third task for performing the third task at third time points, wherein the third task is to be performed repeatedly with a predetermined third repetition time interval, wherein the third repetition time interval is greater than a product of the zeroth repetition time interval and the number two to the power of a third lower integer number and is smaller than a product of the zeroth repetition time interval and the number two to the power of a third upper integer number, wherein the third lower integer number increased by one is equal to the third upper integer number.

The third repetition time interval may not be represented as a product of the time unit (zeroth repetition time interval) and a power of two. In fact, the third repetition time interval may be equal to $\Delta t$ times a factor, wherein the factor may amount to 3, 5, 6, 7, 9, 10, 11, 12, 13, 14, 15, 17, or any other natural number, when this natural number is not a power of 2. According to an embodiment also the third task may be scheduled for performing the third task at third time points. Thereby, the method for scheduling several tasks is flexible also to handle tasks which are repeatedly to be performed with repetition time intervals different from regular repetition time intervals.

According to an embodiment the scheduling the third task comprises identifying the third lower integer number and associating the third task to a third list established to comprise at least one task to be performed repeatedly with a repetition time interval which is equal to a product of the zeroth time interval and the number two to the power of the third lower integer number. According to an embodiment the third repetition time interval $\Delta t3 = \Delta t*T$, wherein T is an integer number (natural number), being different from a power of two. The third task is associated with the list D for which $2^D \leq T$, wherein D is the largest integer for which this inequality holds. When the task is entered into the list the number of remaining time units (until this list is processed again) R(D) in list D may be determined as:

$$R(D) = 1 + (2^N + 2^{D-1} - c - 1) \% 2^D ,$$

where c is the binary counter as defined above, N is the number of bits in the counter, and % is the modulus operation.

When the list D expires (is processed or executed involving performing the tasks comprised in list D), R(D) time units have passed and T is therefore reduced by this amount to obtain T'. If after this reduction T'>0, the third task is not scheduled to be performed (or is not executed), but the third task is again entered into a list D' for which $2^{D'} \geq T'$. When this list D' is processed, T' is reduced by the new R(D') to obtain T". If T" >0 still, the task is again not scheduled to be performed but entered in another list D", until T" is reduced to 0. When the last list D" into which the task, in particular the third task, has been entered is to be processed and R(D")=0, the third task is scheduled to be performed at this counter value of c.

It should be noted that shifting of the third task to one or more lists is independent on the number of tasks comprised in the lists. Thereby, manipulating, in particular inserting, of tasks is facilitated, thus reducing administrative overhead. In particular, according to an embodiment, the quantity T' of a task associated with a particular list D is maintained, kept or stored it the list where this task is comprised. Only if T'=0 the associated task is to be scheduled to be performed, when the list D is processed. If T'≠0, the associated task in the list D is not performed or scheduled to be performed, when the list D is executed according to the determined order of lists.

According to an embodiment a method for performing a first task and a second task is provided, wherein the first task is to be performed repeatedly with a predetermined first repetition time interval and the second task is to be performed repeatedly with a predetermined second repetition time interval, the method comprising scheduling the first task and the second task according to a method for scheduling a first task and a second task according to any of the preceding claims; performing the first task at the first time points; and performing the second task at the second time points.

Performing the first task and/or performing the second task may comprise actuating a technical apparatus, reading a measurement value, generating a measurement value, sampling a signal or measurement value, triggering a detector or sensor for generating a signal, and the like comprising operations as described with reference to the meaning of the term "task" given above. Thereby, the method may advantageously be utilized for performing a large number of technical tasks having different repetition time intervals.

According to an embodiment the performing the first task or the second task comprises controlling an actuator and/or controlling a sensor and/or acquiring a measuring value. Thereby, repeatedly performing plural technical operations or actions is enabled.

According to an embodiment the method is performed to monitor sensor signals of a wind turbine. In particular, the sensor signals may comprise a temperature sensor signal, a position sensor signal, a switch signal and the like. Thereby, operation parameters of a wind turbine may advantageously be acquired, monitored or sampled at different repetition time intervals in an effective manner without involving significant administrative burden. Thereby, an efficiency of the operation of the wind turbine may be improved.

According to an embodiment an apparatus for scheduling a first task and a second task is provided, wherein the first task is to be performed repeatedly with a predetermined first repetition time interval and the second task is to be performed repeatedly with a predetermined second repetition time interval, the apparatus comprising a scheduler being adapted for scheduling the first task for performing the first task at first time points, and the scheduler being adapted for scheduling the second task for performing the second task at second time points, wherein each of the second time points is different from any of the first time points.

Any features disclosed individually or in combination of a method for performing a first task and a second task may also be applied (individually or in combination) to the apparatus for scheduling a first task and a second task.

According to an embodiment a wind turbine is provided comprising the apparatus for scheduling a first task and a second task according to an embodiment as described above. Thereby, a wind turbine is provided being improved regarding efficiency of monitoring plural wind turbine parameters and wind turbine configuration and measurement data.

It has to be noted that embodiments of the invention have been described with reference to different subject matters. In particular, some embodiments have been described with reference to method type claims whereas other embodiments have been described with reference to apparatus type claims. However, a person skilled in the art will gather from the above and the following description that, unless other notified, in addition to any combination of features belonging to one type of subject matter also any combination between features relating to different subject matters, in particular between features of the method type claims and features of the apparatus type claims is considered as to be disclosed with this document.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

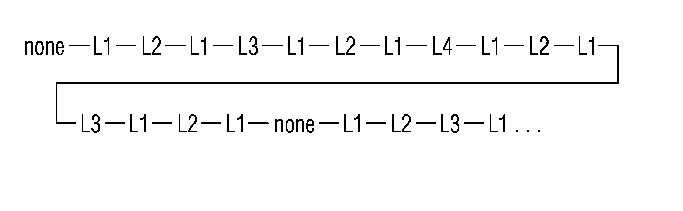

Brief Description of the Drawing

The Figure schematically illustrates an ordered array of lists comprising tasks to be repeatedly performed at different repetition time intervals according to an embodiment of a method for scheduling tasks.

Detailed Description

Instead of having only one delay list of sampling actions as in the prior art, an array of delay lists exists according to an embodiment. These lists are numbered from zero and onwards. Delay list zero (list 0 or L0) holds elements that should be delayed one time unit. Delay list one (list 1 or L1) holds elements that should be delayed two time units. And so on: delay list D (list D or LD) holds elements or tasks that should be delayed $2^D$ (two to the power of D) time units (i.e. theses tasks have repetition time interval $2^D*\Delta t$).

List zero is processed for every time unit. List D is processed for every $2^D$ time units, and the processing is interleaved to ensure that only two lists are processed for every time unit: list zero and one of the others.

As for example 5 lists exist (list 0..list 4), the scheme for list processing (except list zero, which is processed for every time unit) is given in the Figure. The Figure schematically shows the result of ordering an array of five lists L1, L2, L3, L4 and the zeroth list L0 according to an embodiment. During operation of the scheduling method the lists L1, L2, L3 and L4 are executed (involving performing or scheduling the tasks comprised in the lists) in the indicated order from left to right. Together with the execution of one of the lists L1, L2, L3 or L4, also the zeroth list L0 is concurrently be executed, wherein the list L0 comprises tasks to be repeatedly performed with the zeroth repetition time interval (unit time $\Delta t$). As can be seen from the Figure none of the lists L1, L2, L3 and L4 is concurrently executed with another of the lists L1, L2, L3 and L4, but either two of the lists L1, L2, L3 and L4 are executed in an interleaved manner.

Thereby, the lists L1, L2, L3 and L4 are executed such that the respective time interval of the tasks comprised in the respective list is respected.

The scheme for processing of N lists (excluding list 0) could be obtained by having an N-bit binary counter c, incremented by one for every time unit and wrapping around from $2^N$-1 to 0. After every increment, the number of least significant binary zeroes is counted. The list to be processed is one more than this number. However, when the counter c is zero, no list should be processed (except list zero).

The number of remaining time units R(D) in delay list D at any point in time can be found as (in particular for N=4): $R(D) = 1 + (2^N + 2^{D-1} - c - 1) \% 2^D$ , where c is the current counter value, N is the number of bits in the counter, and % is the modulus operation.

The following table 1 illustrates an example for 5 lists, list 0..list 4. A 4-bit counter c is required, taking rounds of values in the interval 0..15.

Table 1:

| counter value c | determine list no. to process | | | calculate remaining no. of ticks for list 3 |
|---|---|---|---|---|
| | counter value (binary) | number of least significant zeroes | list no. to process except list 0 | $R(3) = 1 + (2^4 + 2^{3-1} - c - 1) \% 2^3 = 1 + (19-c) \% 8$ |
| 0 | 0000 | 4 | - | 4 |
| 1 | 0001 | 0 | 1 | 3 |
| 2 | 0010 | 1 | 2 | 2 |
| 3 | 0011 | 0 | 1 | 1 |
| 4 (*) | 0100 | 2 | 3 | 8 |
| 5 | 0101 | 0 | 1 | 7 |
| 6 | 0110 | 1 | 2 | 6 |
| 7 | 0111 | 0 | 1 | 5 |
| 8 | 1000 | 3 | 4 | 4 |
| 9 | 1001 | 0 | 1 | 3 |
| 10 | 1010 | 1 | 2 | 2 |
| 11 | 1011 | 0 | 1 | 1 |
| 12 (*) | 1100 | 2 | 3 | 8 |
| 13 | 1101 | 0 | 1 | 7 |
| 14 | 1110 | 1 | 2 | 6 |
| 15 | 1111 | 0 | 1 | 5 |
| 0 | 0000 | 4 | - | 4 |
| ... | ... | ... | ... | ... |

The leftmost column in table 1 shows the counter value c. The next 3 columns show the calculation of the list number to be processed for each counter value. The last column shows the calculation of the remaining number R(D) of ticks for list 3. List 3 is processed, when the counter value equals 4 and 12; these rows are marked in the table 1 by an asterisk. For these counter values the remaining number R(3) of ticks for list 3 is calculated as 8.

When a sampling action should be scheduled with a delay of T (not being a power of 2) time units, it is entered into the list with the greatest D for which $2^D <= T$. When this list expires, R(D) time units have passed, and T is therefore reduced by this amount. If T is > 0, the action is again entered into the list with the greatest D for which $2^D <= T$. When this list expires, T is reduced by the new R(D). If T is still > 0, the action is again repeated ... until T is reduced to zero.

The table 2 below illustrates the scheduling of a sampling action with a delay of 9 time units using an array of 5 lists. The action is scheduled at counter value 6.

Table 2:

| counter value | list no. to process except list 0 | remaining ticks for list 1 R (1) | remaining ticks for list 2 R(2) | remaining ticks for list 3 R(3) | remaining ticks for list 4 R(4) |
|---|---|---|---|---|---|
| 0 | - | 1 | 2 | 4 | 8 |
| 1 | 1 | 2 | 1 | 3 | 7 |
| 2 | 2 | 1 | 4 | 2 | 6 |
| 3 | 1 | 2 | 3 | 1 | 5 |
| 4 | 3 | 1 | 2 | 8 | 4 |
| 5 | 1 | 2 | 1 | 7 | 3 |
| 6 (*) | 2 | 1 | 4 | 6 (A) | 2 |

(continued)

| counter value | list no. to process except list 0 | remaining ticks for list 1 R (1) | remaining ticks for list 2 R(2) | remaining ticks for list 3 R(3) | remaining ticks for list 4 R(4) |
|---|---|---|---|---|---|
| 7 | 1 | 2 | 3 | 5 | 1 |
| 8 | 4 | 1 | 2 | 4 | 16 |
| 9 | 1 | 2 | 1 | 3 | 15 |
| 10 | 2 | 1 | 4 | 2 | 14 |
| 11 | 1 | 2 | 3 | 1 | 13 |
| 12 (*) | 3 | 1 (B) | 2 | 8 | 12 |
| 13 (*) | 1 | 2 (C) | 1 | 7 | 11 |
| 14 | 2 | 1 | 4 | 6 | 10 |
| 15 | 1 | 2 | 3 | 5 | 9 |
| 0 | - | 1 | 2 | 4 | 8 |

The greatest D for which $2^D <= 9$ is D=3. So the action is initially entered into list 3 - marked (A) in the table 2. At this point in time list 3 will expire after 6 ticks, so when list 3 expires, the action is removed from the list and its remaining delay is calculated to 9 - 6 = 3.

The greatest D for which $2^D <= 3$ is D=1. So the action is now entered into list 1 - marked (B) in the table 2. At this point in time list 1 will expire after 1 tick, so when list 1 expires, the action is removed from the list and its remaining delay is calculated to 3 - 1 = 2.

The greatest D for which $2^D <= 2$ is again D=1. So the action is reentered into list 1 - marked (C) in the table 2. At this point in time list 1 will expire after 2 ticks, so when list 1 expires, the action is removed from the list and its remaining delay is calculated to 2 - 2 = 0. The action should now be carried out.

The properties for this algorithm according to an embodiment are:

Insertion of a task: loop at most N times to identify the list to insert into, hereafter insert in no specific position in list. Maintenance per time unit: expire all list zero's elements. Then loop at most N times to identify the other expired list (if any), process all that list's elements to see if expired, insert all non-expired ones in their new list.

In an embodiment of a wind turbine, there is the following distribution of sensor sampling time intervals as illustrated in table 3.

Table 3:

| sampling time interval (ms) | number of inputs |
|---|---|
| 10 | ~5 |
| 50 | ~60 |
| 100 | ~60 |
| 500 | ~25 |

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

**Claims**

1. A method for scheduling a first task and a second task, wherein the first task is to be performed repeatedly with a predetermined first repetition time interval ($\Delta t1$) and the second task is to be performed repeatedly with a predetermined second repetition time interval (Δt2), the method comprising:

- scheduling the first task for performing the first task at first time points; and
- scheduling the second task for performing the second task at second time points,

wherein each of the second time points is different from any of the first time points.

2. The method according to claim 1, further comprising:

- scheduling a zeroth task for performing the zeroth task at zeroth time points,

wherein the zeroth task is to be performed repeatedly with a predetermined zeroth repetition time interval (Δt),
wherein each one of the first time points is equal to one of the zeroth time points and each one of the second time points is equal to one of the zeroth time points,
wherein the zeroth repetition time interval is smaller than the first repetition time interval and smaller than the second repetition time interval.

3. The method according to claim 1 or 2, wherein
the first repetition time interval (Δt1) is equal to a product of the zeroth repetition time interval (Δt) and the number two to the power of a first integer number (I1) and
the second repetition time interval (Δt2) is equal a product of the zeroth repetition time interval (Δt) and the number two to the power of a second integer number (I2).

4. The method according to any of the preceding claims,
wherein the method is further adapted
for scheduling at least one further first task and/or
for scheduling at least one further second task, wherein the at least one further first task is to be performed repeatedly with the predetermined first repetition time interval and/or the at least one further second task is to be performed repeatedly with the predetermined second repetition time interval, the method further comprising:

- scheduling the at least one further first task for performing the at least one further first task at the first time points; and/or
- scheduling the at least one further second task for performing the at least one further second task at the second time points.

5. The method according to claim 4, further comprising

- establishing a first list (L1) comprising the first task and the at least one further first task; and/or
- establishing a second list (L2) comprising the second task and the at least one further second task.

6. The method according to claim 5, wherein the method is further adapted for scheduling at least one Nth task, wherein the at least one Nth task is to be performed repeatedly with a predetermined Nth repetition time interval, wherein the Nth repetition time interval is equal to a product of the zeroth repetition time interval and the number two to the power of integer number N, the integer number N being greater than the first integer number and being greater than the second integer number, the method further comprising:

- scheduling the at least one Nth task for performing the Nth task at Nth time points, wherein each of the Nth time points is different from any of the first time points and is different from any of the second time points; and
- establishing at least one further list including a Nth list (LN), the Nth list comprising the at least one Nth task.

7. The method according to claim 6, further comprising determining a particular order for scheduling tasks comprised in the first list, the second list and the at least one further list by considering a N-bit binary counter (c) which is incremented by one after each expiry of zeroth repetition time interval.

8. The method according to any of claims 2 to 7, further comprising

- scheduling a third task for performing the third task at third time points,

wherein the third task is to be performed repeatedly with a predetermined third repetition time interval (T*Δt), wherein the third repetition time interval

is greater than a product of the zeroth repetition time interval and the number two to the power of a third lower integer number and

is smaller than a product of the zeroth repetition time interval and the number two to the power of a third upper integer number,

wherein the third lower integer number increased by one is equal to the third upper integer number.

9. The method according to claim 8, wherein the scheduling the third task comprises identifying the third lower integer number and associating the third task to a third list established to comprise at least one task to be performed repeatedly with a time interval which is equal to a product of the zeroth repetition time interval and the number two to the power of the third lower integer number.

10. A method for performing a first task and a second task, wherein the first task is to be performed repeatedly with a predetermined first repetition time interval and the second task is to be performed repeatedly with a predetermined second repetition time interval the, method comprising:

   ● scheduling the first task and the second task according to a method according to any of the preceding claims;
   ● performing the first task at the first time points; and
   ● performing the second task at the second time points.

11. The method according to claim 10, wherein the performing the first task or the second task comprises controlling an actuator and/or controlling a sensor and/or acquiring a measuring value.

12. The method according to claim 10 or 11, wherein the method is performed to monitor sensor signals of a wind turbine.

13. An apparatus for scheduling a first task and a second task, wherein the first task is to be performed repeatedly with a predetermined first repetition time interval and the second task is to be performed repeatedly with a predetermined second repetition time interval, the apparatus comprising:

   ● a scheduler for scheduling the first task for performing the first task at first time points, and for scheduling the second task for performing the second task at second time points,

   wherein each of the second time points is different from any of the first time points.

none—L1—L2—L1—L3—L1—L2—L1—L4—L1—L2—L1⌐

⌐L3—L1—L2—L1—none—L1—L2—L3—L1 . . .

Europäisches
Patentamt

European
Patent Office

Office européen
des brevets

# EUROPEAN SEARCH REPORT

Application Number

EP 10 16 5727

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2003/217093 A1 (DAILEY JAMES E [US]) 20 November 2003 (2003-11-20) * the whole document * | 1-13 | INV. G06F9/48 |
| A | US 2005/022197 A1 (PHAM TIET [US]) 27 January 2005 (2005-01-27) * abstract * * paragraph [0002] - paragraph [0007] * * paragraph [0017] - paragraph [0023] * * paragraph [0031] - paragraph [0034] * * figures 3, 4A * | 1-13 | |
| X | EP 0 798 638 A2 (HITACHI LTD [JP]) 1 October 1997 (1997-10-01) * column 1, line 1 - column 4, line 5 * * column 5, line 25 - column 6, line 5 * * column 9, line 20 - column 13, last line * * column 27, line 35 - column 29, line 10 * | 1-13 | |
| A | ZVIKA BRAKERSKI ET AL: "General Perfectly Periodic Scheduling" ALGORITHMICA, SPRINGER-VERLAG, NE LNKD-DOI:10.1007/S00453-005-1182-X, vol. 45, no. 2, 3 March 2006 (2006-03-03), pages 183-208, XP019428522 ISSN: 1432-0541 * page 183, line 1 - page 186, line 3 * * page 188, line 15 - line 25 * * page 190, line 5 - line 22 * | 1-13 | TECHNICAL FIELDS SEARCHED (IPC) G06F |

-/--

The present search report has been drawn up for all claims

| Place of search | Date of completion of the search | Examiner |
|---|---|---|
| Munich | 21 October 2010 | Jonsson, Svante |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 10 16 5727

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CHIH-WEN HSUEH ET AL: "On-line schedulers for pinwheel tasks using the time-driven approach"<br>REAL-TIME SYSTEMS, 1998. PROCEEDINGS. 10TH EUROMICRO WORKSHOP ON BERLIN, GERMANY 17-19 JUNE 1998, LOS ALAMITOS, CA, USA,IEEE COMPUT. SOC, US LNKD-DOI:10.1109/EMWRTS.1998.685083,<br>17 June 1998 (1998-06-17), pages 180-187, XP010287678<br>ISBN: 978-0-8186-8503-3<br>* page 180, left-hand column, line 1 - page 181, left-hand column, line 17 * | 1-13 | |

TECHNICAL FIELDS
SEARCHED (IPC)

The present search report has been drawn up for all claims

| Place of search | Date of completion of the search | Examiner |
|---|---|---|
| Munich | 21 October 2010 | Jonsson, Svante |

EPO FORM 1503 03.82 (P04C01)

## ANNEX TO THE EUROPEAN SEARCH REPORT
## ON EUROPEAN PATENT APPLICATION NO.

EP 10 16 5727

This annex lists the patent family members relating to the patent documents cited in the above-mentioned European search report.
The members are as contained in the European Patent Office EDP file on
The European Patent Office is in no way liable for these particulars which are merely given for the purpose of information.

21-10-2010

| Patent document cited in search report | | Publication date | Patent family member(s) | | Publication date |
|---|---|---|---|---|---|
| US 2003217093 | A1 | 20-11-2003 | NONE | | |
| US 2005022197 | A1 | 27-01-2005 | CA | 2458500 A1 | 21-01-2005 |
| EP 0798638 | A2 | 01-10-1997 | CA | 2200929 A1 | 28-09-1997 |
| | | | US | 5944778 A | 31-08-1999 |

EPO FORM P0459

For more details about this annex : see Official Journal of the European Patent Office, No. 12/82